(19) Europäisches Patentamt
European Patent Office
Office européen des brevets

(11) EP 4 550 729 A1

(12) EUROPEAN PATENT APPLICATION

(43) Date of publication:
07.05.2025 Bulletin 2025/19

(21) Application number: 23206715.7

(22) Date of filing: 30.10.2023

(51) International Patent Classification (IPC):
H04L 25/02 (2006.01)    H04L 25/03 (2006.01)
H04L 25/06 (2006.01)

(52) Cooperative Patent Classification (CPC):
H04L 25/0224; H04L 25/03165; H04L 25/03968;
H04L 25/067; H04L 25/0204; H04L 2025/03426

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Nokia Solutions and Networks Oy
02610 Espoo (FI)

(72) Inventors:
• HONKALA, Mikko Johannes
  Espoo (FI)
• HUTTUNEN, Janne Matti Juhani
  Espoo (FI)
• KORPI, Dani Johannes
  Tampere (FI)

(74) Representative: Nokia EPO representatives
Nokia Technologies Oy
Karakaari 7
02610 Espoo (FI)

(54) **MACHINE LEARNING-BASED RECEIVER IN WIRELESS COMMUNICATION NETWORK**

(57) The present disclosure relates to a machine learning (ML)-based receiver that is invariant to the number of Multiple Input Multiple Output (MIMO) layers it processes. The ML-based receiver is configured, for each MIMO layer, to obtain a set of intermediate estimates by performing an equalization operation based on channel information and an array of symbols received over the MIMO layers, and to obtain a set of final estimates for the array of symbols by using a layer-associated block of a ML model. Each layer-associated block of the ML model is configured to receive the set of intermediate estimates as input data and output the set of final estimates. The layer-associated blocks are configured operate in parallel and exchange weights between each other during a training phase. In some embodiments, the layer-associated blocks may be further configured to exchange the input data between each other during the training and inference phases.

FIG. 4

EP 4 550 729 A1

## Description

### TECHNICAL FIELD

The present disclosure relates generally to the field of wireless communications. In particular, the present disclosure relates to a Machine Learning (ML)-based receiver and its operation method in a wireless communication network.

### BACKGROUND

Machine Learning (ML)-based receivers have been recently developed, with parts of the ML-based receivers being learned by Neural Networks (NN). This facilitates improved performance and higher flexibility, as everything is learned directly from input data. A specific implementation of such a receiver is the DeepRx receiver (e.g., see Mikko Honkala, et al., "DeepRx: Fully Convolutional Deep Learning Receiver," IEEE Transactions on Wireless Communications, vol. 20, no. 6, pp. 3925-3940, June 2021, doi: 10.1109/TWC.2021.3054520, and D. Korpi, et al. "DeepRx MIMO: Convolutional MIMO Detection with Learned Multiplicative Transformations", IEEE International Conference on Communications (ICC), 14-23 June, 2021, DOI: 10.1109/ICC42927.2021.9500518). The DeepRx receiver is based on deep Convolutional NNs (CNNs), and it achieves high performance in various firth generation (5G) Multiple Input Multiple Output (MIMO) scenarios.

More specifically, simulation results have shown that the DeepRx receiver achieves high performance with considerably sparser Demodulation Reference Signals (DMRS) patterns than required by conventional (non-ML-based) receivers. This is because the DeepRx receiver essentially learns to perform data-aided detection, where it utilizes unknown received data symbols to make the detection more accurate. During the data-aided detection, the DeepRx receiver knows an underlying constellation shape and can effectively use this knowledge to properly equalize a received signal.

While the original MIMO DeepRx architecture can in principle be trained to operate with any number of MIMO layers, it would likely be rather inefficient to do in terms of a model size, a training length and radio performance, since the original DeepRx architecture is monolithic and initially trained based on a single maximum number of MIMO layers. A more efficient solution is therefore needed, especially when going from today's 2-4 to 8-16 MIMO layers which are planned to be used in next-generation (e.g., 6G) communication systems.

### SUMMARY

This summary is provided to introduce a selection of concepts in a simplified form that are further described below in the detailed description. This summary is not intended to identify key features of the present disclosure, nor is it intended to be used to limit the scope of the present disclosure.

It is an objective of the present disclosure to provide a technical solution that allows a single ML-based receiver to be efficiently used for any number of MIMO layers.

The objective above is achieved by the features of the independent claims in the appended claims. Further embodiments and examples are apparent from the dependent claims, the detailed description, and the accompanying drawings.

According to a first aspect, a ML-based receiver in a wireless communication network is provided. The ML-based receiver comprises at least one processor and at least one memory storing instructions that, when executed by the at least one processor, cause the ML-based receiver to perform at least as follows. At first, the ML-based receiver receives an array of symbols and a set of reference signals over a plurality of MIMO layers associated with a MIMO channel. Then, the ML-based receiver uses the set of reference signals and the array of symbols to obtain channel information that is indicative of a state of the MIMO channel. After that, for each MIMO layer of the plurality of MIMO layers, the ML-based receiver obtains a set of intermediate estimates for the array of symbols by performing an equalization operation based on the channel information and the array of symbols, as well as obtains a set of final estimates for the array of symbols by using a layer-associated block of a ML model. Each layer-associated block of the ML model has a set of weights and is configured to receive the set of intermediate estimates as input data and, in response, output the set of final estimates. The layer-associated blocks of the ML model are further configured to operate in parallel and exchange the sets of weights between each other during a training phase. Once trained, the ML-based receiver according to the first aspect may perform parallel data-aided processing of the MIMO layers using shared trained weights for each MIMO layer. Thus, the ML-based receiver according to the first aspect may be initially trained for a number of MIMO layers and then be directly used for a smaller amount of MIMO layers or even for a larger number of MIMO layers after simple and efficient fine-tuning. In other words, there is no need to train it whenever a new number of MIMO layer is to be processed. Therefore, the ML-based receiver according to the first aspect may be considered as a receiver that is independent of the number of MIMO layers to be processed.

In one example embodiment of the first aspect, each of the layer-associated blocks of the ML model is further configured to receive the input data (i.e., the sets of intermediate estimates) from the other layer-associated blocks of the ML model as a combined value that is independent of a number of MIMO layers in the plurality of MIMO layers. The exchange of the input data between the layer-associated blocks of the ML model in concert with the shared or exchanged trained weights may contribute to better independence of the ML-based receiver from the number of MIMO layers, thereby resulting in its proper detection accuracy for any number of MIMO layers.

In one example embodiment of the first aspect, the combined value comprises at least one of: an arithmetic mean of the input data of the other layer-associated blocks of the ML model; a sum of the input data of the other layer-associated blocks of the ML model; a difference of the input data of the other layer-associated blocks of the ML model; a product of the input data of the other layer-associated blocks of the ML model; and a value obtained by concatenating the input data of the other layer-associated blocks of the ML model. By using the combined value thus defined, it is possible to easily and simply "mix" the input data from the layer-associated blocks of the ML model such that the operation of the ML-based receiver is invariant to the number of MIMO layers.

In one example embodiment of the first aspect, each of the layer-associated blocks of the ML model is further configured to process the input data iteratively until a user-defined stopping condition is met. If this stopping condition is met for one of the MIMO layers, the corresponding layer-associated block of the ML model is further configured to output a processing result obtained at a last iteration as the set of final estimates. Thus, this iteration scheme may provide early exit for individual MIMO layer processing if the stopping condition is met, while continuing to process the other MIMO layers. By doing so, it is possible to reduce average power consumption, since a trained model complexity is linear to the number of MIMO layers.

In one example embodiment of the first aspect, each of the layer-associated blocks of the ML model is further configured to use a different set of intermediate weights at each iteration. In other words, the weights may be trained separately for each iteration. This embodiment may be beneficially used depending on hardware and radio performance requirements applied for the wireless communication network.

In one example embodiment of the first aspect, each of the layer-associated blocks of the ML model comprises at least one of a Convolutional Neural Network (CNN), a Transformer NN (TNN) and a self-attention-based NN. By using these types of NNs, it is possible to predict the set of final estimates more efficiently, thereby improving the operation of the ML-based receiver.

In one example embodiment of the first aspect, the equalization operation is a Linear Minimum Mean Square Error (LMMSE)-based equalization or a Maximum Ratio Combining (MRC)-based equalization. By using these types of equalization techniques, it is possible to predict the set of intermediate estimates more efficiently, thereby improving the operation of the ML-based receiver. Furthermore, these types of equalization techniques may additionally "mix" information about the MIMO layers such that the dependence on the number of the MIMO layers is already excluded from further consideration. Given this, there may be no need to mix the input data of the ML models. Thus, by using these types of equalization techniques, the ML-based receiver may have a more simplified architecture.

According to a second aspect, a method for operating a ML-based receiver in a wireless communication network is provided. The method starts with the steps of receiving an array of symbols and a set of reference signals over a plurality of MIMO layers associated with a MIMO channel. Then, the method proceeds to the step of using the set of reference signals and the array of symbols to obtain channel information that is indicative of a state of the MIMO channel. Next, for each MIMO layer of the plurality of MIMO layers, the following steps are performed: a set of intermediate estimates for the array of symbols is obtained by performing an equalization operation based on the channel information and the array of symbols, and a set of final estimates for the array of symbols is obtained by using a layer-associated block of a ML model. Each layer-associated block of the ML model has a set of weights and is configured to receive the set of intermediate estimates as input data and output the set of final estimates. The layer-associated blocks of the ML model are further configured to operate in parallel and exchange the sets of weights between each other during a training phase. By doing so, the ML-based receiver may perform parallel data-aided processing of the MIMO layers using shared trained weights for each MIMO layer. Thus, it is possible to train the ML-based receiver for a number of MIMO layers and then directly use it for a smaller amount of MIMO layers or even for a larger number of MIMO layers after simple and efficient fine-tuning. In other words, there is no need to train the ML-based receiver whenever a new number of MIMO layer is to be processed.

In one example embodiment of the second aspect, each of the layer-associated blocks of the ML model is further configured to receive, during the training phase, the input data from the other layer-associated blocks of the ML model as a combined value that is independent of a number of MIMO layers in the plurality of MIMO layers. The exchange of the input data between the layer-associated blocks of the ML model in concert with the shared or exchanged trained weights may contribute to better independence of the ML-based receiver from the number of MIMO layers, thereby resulting in its proper detection accuracy for any number of MIMO layers.

In one example embodiment of the second aspect, the combined value comprises at least one of: an arithmetic mean of the input data of the other layer-associated blocks of the ML model; a sum of the input data of the other layer-associated blocks of the ML model; a difference of the input data of the other layer-associated blocks of the ML model; a product of the input data of the other layer-associated blocks of the ML model; and a value obtained by concatenating the input data of the other layer-associated blocks of the ML model. By using the combined value thus configured, it is possible to easily and simply "mix" the input data from the layer-associated blocks of the ML model such that the operation of the ML-based receiver is invariant to the number of MIMO layers.

In one example embodiment of the second aspect, each of the layer-associated blocks of the ML model is further configured to process the input data iteratively until a user-defined stopping condition is met. If this stopping condition is met for one of the MIMO layers, the corresponding layer-associated block of the ML model is further configured to output a processing result obtained at a last iteration as the set of final estimates. Thus, this iteration scheme may provide early exit for individual MIMO layer processing if the stopping condition is met, while continuing to process the other MIMO layers. By doing so, it is possible to reduce average power consumption, since a trained model complexity is linear to the number of MIMO layers.

In one example embodiment of the second aspect, each of the layer-associated blocks of the ML model is further configured to use a different set of intermediate weights at each iteration. In other words, the weights may be trained separately for each iteration. This embodiment may be beneficially used depending on hardware and radio performance requirements applied for the wireless communication network.

In one example embodiment of the second aspect, each of the layer-associated blocks of the ML model comprises at least one of a CNN, a TNN and a self-attention-based NN. By using these types of NNs, it is possible to predict the set of final probability estimates more efficiently, thereby improving the operation of the ML-based receiver.

In one example embodiment of the second aspect, the equalization operation is a LMMSE-based equalization or a MRC-based equalization. By using these types of equalization techniques, it is possible to predict the set of intermediate estimates more efficiently, thereby improving the operation of the ML-based receiver. Furthermore, these types of equalization techniques may additionally "mix" information about the MIMO layers such that the dependence on the number of the MIMO layers is already excluded from further consideration. Given this, there may be no need to mix the input data of the layer-associated blocks of the ML model. Thus, by using these types of equalization techniques, a more simplified architecture of the ML-based receiver may be provided.

According to a third aspect, a computer program product is provided. The computer program product comprises a computer-readable storage medium that stores a computer code. Being executed by at least one processor, the computer code causes the at least one processor to perform the method according to the second aspect. By using such a computer program product, it is possible to simplify the implementation of the method according to the second aspect in any ML-based receiver, like the ML-based receiver according to the first aspect.

According to a fourth aspect, an ML-based receiver in a wireless communication network is provided. The ML-based receiver comprises a means for receiving an array of symbols over a plurality of MIMO layers associated with a MIMO channel and a means for receiving a set of reference signals over the plurality of MIMO layers. The ML-based receiver further comprises a means for using the set of reference signals and the array of symbols to obtain channel information that is indicative of a state of the MIMO channel. The ML-based receiver further comprises a means for performing, for each MIMO layer of the plurality of MIMO layers, the following operation: obtaining a set of intermediate estimates for the array of symbols by performing an equalization operation based on the channel information and the array of symbols, and obtaining a set of final estimates for the array of symbols by using a layer-associated block of a ML model. Each layer-associated block of the ML model has a set of weights and is configured to receive the set of intermediate estimates as input data and output the set of final estimates. The layer-associated blocks of the ML model are further configured operate in parallel and exchange the sets of weights between each other during a training phase. Once trained, the ML-based receiver according to the fourth aspect may perform parallel data-aided processing of the MIMO layers using shared trained weights for each MIMO layer. Thus, the ML-based receiver according to the fourth aspect may be initially trained for a number of MIMO layers and then be directly used for a smaller amount of MIMO layers or even for a larger number of MIMO layers after simple and efficient fine-tuning. In other words, there is no need to train it whenever a new number of MIMO layer is to be processed. Therefore, the ML-based receiver according to the fourth aspect may be considered as a receiver that is independent of the number of MIMO layers to be processed.

Other features and advantages of the present disclosure will be apparent upon reading the following detailed description and reviewing the accompanying drawings.

## BRIEF DESCRIPTION OF THE DRAWINGS

The present disclosure is explained below with reference to the accompanying drawings in which:

FIG. 1 shows a block diagram of a Machine Learning (ML)-based receiver (i.e., the DeepRx receiver) in accordance with the prior art;

FIG. 2 shows a block diagram of a ML-based receiver in accordance with one example embodiment;

FIG. 3 shows a flowchart of a method for operating the ML-based receiver of FIG. 2 in accordance with one example embodiment;

FIG. 4 shows a block diagram of a processor included in the receiver of FIG. 2 in accordance with a first example embodiment;

FIG. 5 shows a block diagram of a processor included in the receiver of FIG. 2 in accordance with a second example embodiment;

FIG. 6 shows a block diagram of a layer mixer that may be used in the processor of FIG. 5 in accordance with one example embodiment;

FIG. 7 shows a block diagram of a processor included in the receiver of FIG. 2 in accordance with a third example embodiment;

FIGs. 8A and 8B schematically show two different approaches for training each layer-associated block of a ML model in accordance with one example embodiment, namely: FIG. 8A illustrates the first (iterative) approach in which each next training iteration uses intermediate weights obtained on a previous training iteration, and FIG. 8B illustrates the second (unrolled) approach in which each training iteration uses a different set of intermediate weights;

FIGs. 9A and 9B show an uncoded Bit-Error Rate (BER) versus a Signal to Interference and Noise Ratio (SINR) in dB, as obtained by using MRC-based equalization in two cases: without layer mixers (FIG. 9A) and with layer mixers (FIG. 9B);

FIGs. 10A and 10B show the uncoded BER versus the SINR in dB, as obtained by using LMMSE-based equalization in two cases: without layer mixers (FIG. 10A) and with layer mixers (FIG. 10B); and

FIGs. 11A and 11B show the uncoded BER versus the SINR in dB for two different MIMO setups, namely: 16x4 MIMO setup (FIG. 11A) and 16x2 MIMO setup (FIG. 11B).

## DETAILED DESCRIPTION

Various embodiments of the present disclosure are further described in more detail with reference to the accompanying drawings. However, the present disclosure can be embodied in many other forms and should not be construed as limited to any certain structure or function discussed in the following description. In contrast, these embodiments are provided to make the description of the present disclosure detailed and complete.

According to the detailed description, it will be apparent to the ones skilled in the art that the scope of the present disclosure encompasses any embodiment thereof, which is disclosed herein, irrespective of whether this embodiment is implemented independently or in concert with any other embodiment of the present disclosure. For example, the apparatus and method disclosed herein can be implemented in practice by using any numbers of the embodiments provided herein. Furthermore, it should be understood that any embodiment of the present disclosure can be implemented using one or more of the elements presented in the appended claims.

Unless otherwise stated, any embodiment recited herein as "example embodiment" should not be construed as preferable or having an advantage over other embodiments.

According to the example embodiments disclosed herein, a User Equipment (UE) may refer to an electronic computing device that is configured to perform wireless communications. The UE may be implemented as a mobile station, a mobile terminal, a mobile subscriber unit, a mobile phone, a cellular phone, a smart phone, a cordless phone, a personal digital assistant (PDA), a wireless communication device, a desktop computer, a laptop computer, a tablet computer, a gaming device, a netbook, a smartbook, an ultrabook, a medical mobile device or equipment, a biometric sensor, a wearable device (e.g., a smart watch, smart glasses, a smart wrist band, etc.), an entertainment device (e.g., an audio player, a video player, etc.), a vehicular component or sensor (e.g., a driver-assistance system), a smart meter/sensor, an unmanned vehicle (e.g., an industrial robot, a quadcopter, etc.) and its component (e.g., a self-driving car computer), industrial manufacturing equipment, a global positioning system (GPS) device, an Internet-of-Things (IoT) device, an Industrial IoT (IIoT) device, a machine-type communication (MTC) device, a group of Massive IoT (MIoT) or Massive MTC (mMTC) devices/sensors, or any other suitable mobile device configured to support wireless communications. In some embodiments, the UE may refer to at least two collocated and interconnected UEs thus defined.

As used in the example embodiments disclosed herein, a network node may refer to a fixed point of communication/communication node for a UE in a particular wireless communication network. More specifically, the network node may be used to connect the UE to a Data Network (DN) through a Core Network (CN) and may be referred to as a base transceiver station (BTS) in terms of the 2G communication technology, a NodeB in terms of the 3G communication technology, an evolved NodeB (eNodeB or eNB) in terms of the 4G communication technology, and a gNB in terms of the 5G New Radio (NR) communication technology. The network node may serve different cells, such as a macrocell, a microcell, a picocell, a femtocell, and/or other types of cells. The macrocell may cover a relatively large geographic area (e.g., at least several kilometers in radius). The microcell may cover a geographic area less than two kilometers in radius, for example. The picocell may cover a relatively small geographic area, such, for example, as offices, shopping malls, train stations, stock exchanges, etc. The femtocell may cover an even smaller geographic area (e.g., a home). Correspondingly, the network node serving the macrocell may be referred to as a macro node, the network node serving the microcell may be referred to as a micro node, and so on.

According to the example embodiments disclosed herein, a wireless communication network, in which a UE and a network node communicate with each other, may refer to a cellular or mobile network, a Wireless Local Area Network (WLAN), a Wireless Personal Area Networks (WPAN), a Wireless Wide Area Network (WWAN), a satellite communication (SATCOM) system, or any other type of wireless communication networks. Each of these types of wireless communication networks supports wireless communications according to one or more communication protocol standards. For example, the cellular network may operate according to the Global System for Mobile Communications (GSM) standard, the Code-Division Multiple Access (CDMA) standard, the Wide-Band Code-Division Multiple Access (WCDM) standard, the Time-Division Multiple Access (TDMA) standard, or any other communication protocol standard, the WLAN may operate according to one or more versions of the IEEE 802.11 standards, the WPAN may operate according to the Infrared Data Association (IrDA), Wireless USB, Bluetooth, or ZigBee standard, and the WWAN may operate according to the Worldwide Interoperability for Microwave Access (WiMAX) standard.

Data transmission between UEs, between network nodes, or between UEs and network nodes may be performed using a MIMO technology. The MIMO technology involves employing multiple transmit antennas at a transmitting entity (e.g., a UE or network node) and multiple receive antennas at a receiving entity (e.g., another UE or network node) for data transmission. A MIMO channel formed by the transmit antennas and receive antennas may be decomposed into spatial layers (also known as MIMO layers). The MIMO layers may be used to transmit data in parallel to achieve higher throughput and/or redundantly to achieve greater reliability. The MIMO layers may experience various deleterious channel conditions (e.g., fading, multipath, interference effects, etc.), for which reason they may achieve different signal-to-noise-and-interference ratios (SNRs). The SNR of each MIMO layer determines its transmission capacity, which is typically quantified by a particular data rate that may be reliably transmitted on the MIMO layer. For a time-varying wireless channel, the channel conditions change over time and the SNR of each MIMO layer also changes over time. The different SNRs of the MIMO layers plus the time-varying nature of the SNR for each MIMO layer make it challenging to efficiently transmit data in a MIMO system.

ML-based receivers have been recently developed, which allow transmitted data in MIMO systems to be efficiently and reliably restored or decoded at the receiving entity. More specifically, the ML-based receivers are configured to predict estimates (e.g., Log Likelihood Ratios (LLRs)) for the transmitted data by using a ML model (e.g., Neural Network (NN)).

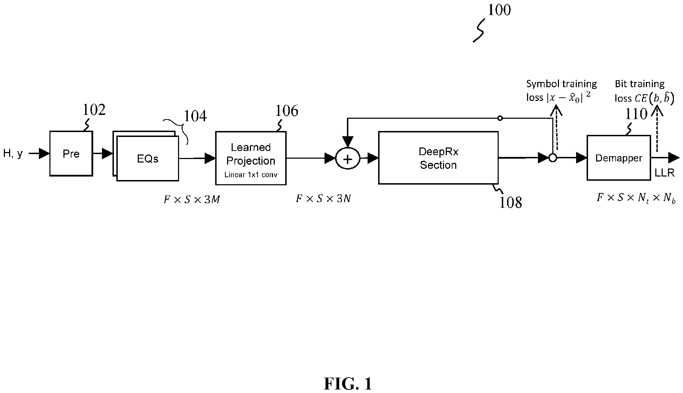

FIG. 1 shows a block diagram of a ML-based receiver 100 in accordance with the prior art. In particular, the ML-based receiver 100 corresponds to the original architecture of the DeepRx receiver. The ML-based receiver 100 comprises a pre-processing block 102 for receiving, over a set of MIMO layers, an array of data or symbols which may be expressed as follows:

$$\mathbf{y} = \mathbf{H}\mathbf{x} + \mathbf{n},$$

where $\mathbf{y}$ is the received array of data, $\mathbf{y} \in \mathbb{C}^{F \times S \times 3M}$, $F$ is the number of subcarriers, $S$ is the number of symbols (typically 14 in 5G systems) carrying pilots, $3M$ is the dimension of input/output data (e.g., if the block 102 is implemented as a Convolutional NN (CNN), it may correspond to the number of convolutional channels or the number of neurons in some other ML-based architecture), $\mathbf{H}$ is the CSI matrix, $\mathbf{x}$ is the transmitted array of data, and $\mathbf{n}$ is the noise-plus-interference signal. Thus, one can consider $\mathbf{y}$ as a distorted (e.g., due to noise) version of $\mathbf{x}$. The block 102 is also assumed to be responsible for receiving reference or pilot signals and using them together with $\mathbf{y}$ to obtain the CSI matrix $\mathbf{H}$. The block 102 may be implemented as a trained (i.e., NN-based) block.

The ML-based receiver 100 further comprises a set 104 of equalization blocks (or, in other words, equalizers (EQs)) each configured to perform an equalization operation (e.g., LMMSE) based on $\mathbf{y}$ and $\mathbf{H}$ for one of the MIMO layers, thereby obtaining a set $\hat{\mathbf{x}}_0$ of intermediate estimates associated with the transmitted array of data (i.e., x) for that MIMO layer. After the sets of intermediate estimates are obtained, they are subjected to scaling to a certain size in a block 106. The block 106 may be also implemented as a trained block, and its output is a set of learned projections each corresponding to one of the MIMO layers and having a size $F \times S \times 3N$, where $N$ is the dimension of input/output data (e.g., if the block 106 is implemented as a CNN, it may correspond to the number of convolutional channels or the number of neurons in some other ML-based architecture). The learned projections are next fed to a DeepRx section 108, where they are refined to obtain a set of final estimates (as a rule, probability estimates) for each MIMO layer. The DeepRx section 108 may be implemented based on a CNN that may be trained by using a Mean Squared Error (MSE) loss function, i.e., $MSE(\mathbf{x}, \hat{\mathbf{x}}_0) = |\mathbf{x} - \hat{\mathbf{x}}_0|^2$. The sets of final estimates are further fed to a demapper 110 that is configured to obtain bit LLRs for $\mathbf{x}$ based on the set of final estimates for each MIMO layer. More specifically, the demapper 110 outputs the array of bit LLRs

$$L \in \mathbb{C}^{F \times S \times N_t \times N_b}$$, where $N_t$ is the number of MIMO layers, and $N_b$ is the number of bits. The demapper 110 may be also implemented as a trained block, and the ML-based receiver 100 may be configured to calculate a binary Cross Entropy (CE) loss function at its output.

It should be noted that the trained blocks of the ML-based receiver 100 are monolithic in the sense that they are always trained to a certain exact number of MIMO layers and there is no flexibility in using the trained architecture of the ML-based receiver 100 to some other number of MIMO layers.

The example embodiments disclosed herein provide a technical solution that allows mitigating or even eliminating the above-sounded drawbacks peculiar to the prior art. In particular, the technical solution disclosed herein relates to a ML-based receiver that is invariant to the number of MIMO layers it processes. More specifically, the ML-based receiver is configured, for each MIMO layer, to obtain a set of intermediate estimates by performing an equalization operation based on channel information (e.g., the CSI matrix) and an array of symbols received over the MIMO layers constituting a MIMO channel, and then to obtain a set of final estimates for the array of symbols by using a layer-associated block of a ML model. Each layer-associated block of the ML model is configured to receive the set of intermediate estimates as input data and output the set of final estimates. The layer-associated blocks of the ML model are further configured to operate in parallel and exchange the sets of weights between each other during a training phase. In some embodiments, the layer-associated blocks of the ML model may be further configured to exchange the input data between each other during the training and inference phases.

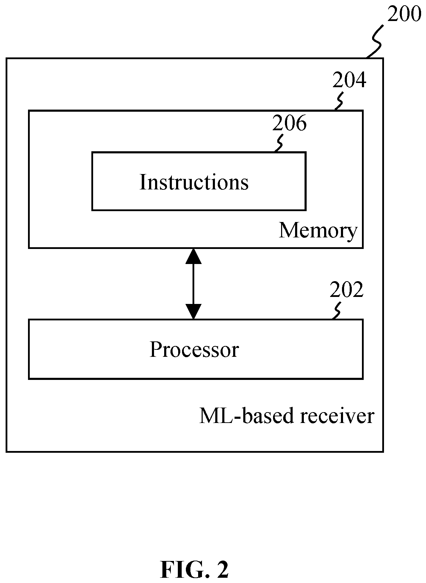

FIG. 2 shows a block diagram of a ML-based receiver 200 in accordance with one example embodiment. The ML-based receiver 200 is intended to be part of a UE or a network node in a wireless communication network. As shown in FIG. 2, the ML-based receiver 200 comprises a processor 202 and a memory 204. The memory 204 stores processor-executable instructions 206 which, when executed by the processor 202, cause the processor 202 to perform the aspects of the present disclosure, as will be described below in more detail. It should be noted that the number, arrangement, and interconnection of the constructive elements constituting the ML-based receiver 200, which are shown in FIG. 2, are not intended to be any limitation of the present disclosure, but merely used to provide a general idea of how the constructive elements may be implemented within the ML-based receiver 200. For example, the processor 202 may be replaced with several processors, as well as the memory 204 may be replaced with several removable and/or fixed storage devices, depending on particular applications. Furthermore, it is assumed that the processor 202 is capable of performing different operations required to perform data reception and transmission, such, for example, as signal modulation/demodulation, encoding/decoding, etc.

The processor 202 may be implemented as a CPU, general-purpose processor, single-purpose processor, microcontroller, microprocessor, application specific integrated circuit (ASIC), field programmable gate array (FPGA), digital signal processor (DSP), complex programmable logic device, etc. It should be also noted that the processor 202 may be implemented as any combination of one or more of the aforesaid. As an example, the processor 202 may be a combination of two or more microprocessors.

The memory 204 may be implemented as a classical nonvolatile or volatile memory used in the modern electronic computing machines. As an example, the nonvolatile memory may include Read-Only Memory (ROM), ferroelectric Random-Access Memory (RAM), Programmable ROM (PROM), Electrically Erasable PROM (EEPROM), solid state drive (SSD), flash memory, magnetic disk storage (such as hard drives and magnetic tapes), optical disc storage (such as CD, DVD and Blu-ray discs), etc. As for the volatile memory, examples thereof include Dynamic RAM, Synchronous DRAM (SDRAM), Double Data Rate SDRAM (DDR SDRAM), Static RAM, etc.

The processor-executable instructions 206 stored in the memory 204 may be configured as a computer-executable program code which causes the processor 202 to perform the aspects of the present disclosure. The computer-executable program code for carrying out operations or steps for the aspects of the present disclosure may be written in any combination of one or more programming languages, such as Java, C++, or the like. In some examples, the computer-executable program code may be in the form of a high-level language or in a pre-compiled form and be generated by an interpreter (also pre-stored in the memory 204) on the fly.

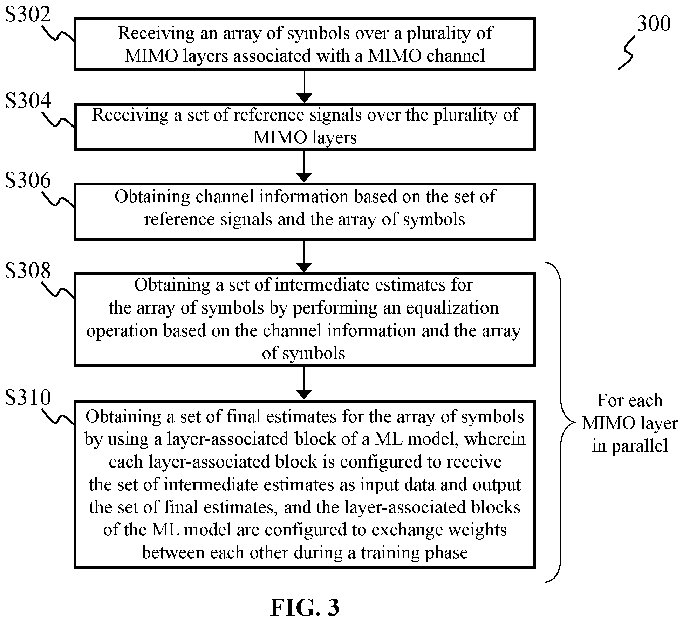

FIG. 3 shows a flowchart of a method 300 for operating the ML-based receiver 200 in accordance with one example embodiment. The method 300 starts with a step S302, in which the processor 202 receives (e.g., via antennas which may be part of or coupled to the ML-based receiver 200) an array of symbols over a plurality of MIMO layers associated with a MIMO channel. Then, the method proceeds to a step S304, in which the processor 202 receives (e.g., via the same antennas) a set of reference signals (e.g., pilot signals) over the plurality of MIMO layers. It should be noted that the steps S302 and S304 may be performed in parallel, if required and depending on capabilities of the processor 202. Next, the method 300 goes on to a step S306, in which the processor 202 obtains channel information based on the set of reference signals and the array of symbols. The channel information is indicative of a state of the MIMO channel and may comprise, for example, a CSI matrix. After that, steps S308 and S310 are performed for each of the MIMO layers in parallel, in which the processor 202 obtains a set of intermediate estimates for the array of symbols first and then a set of final estimates for the array of symbols. More specifically, the set of intermediate estimates is obtained by performing an equalization operation based on the channel information and the array of symbols. Some examples of the equalization operation may include, but not limited to, a Linear Minimum Mean Square Error (LMMSE)-based equalization or a Maximum Ratio Combining (MRC)-based equalization. The set of final estimates is obtained for each MIMO layer by using a layer-associated block of a ML model (e.g., a CNN), which is configured to receive the set of intermediate estimates as input data and, in response, predict the set of final estimates. The layer-associated blocks of the ML model are further configured to operate in parallel and exchange their sets of weights between each other during the training phase of the ML model. Each of the layer-associated blocks of the ML model may be implemented as an individual block of the same NN (e.g., CNN, TNN or self-attention-based NN).

In one embodiment, each of the layer-associated blocks of the ML model may be further configured to receive, during the training and inference phases of the ML model, the input data (i.e., the sets of intermediate estimates) from the other layer-associated blocks of the ML model as a combined value that is independent of the number of the MIMO layers. The combined value may be expressed as an arithmetic mean of the input data of the other layer-associated blocks of the ML model. However, the present disclosure is not limited to this kind of the combined value - in some embodiments, other mathematical operations may be used to combine the input data from the other layer-associated blocks of the ML model such that the combined value is independent of the number of the MIMO layers. Such other mathematical operations may include, but not limited to, addition, subtraction, multiplication, concatenation (e.g., the concatenation of the arithmetic mean and its variance), different moving average techniques.

In one embodiment, each of the layer-associated blocks of the ML model may be configured to iteratively refine the input data (i.e., the sets of intermediate estimates) until a user-defined stopping condition is met. In other words, this iterative refinement scheme may provide early exit for individual MIMO layer processing if the stopping condition is met, while continuing to process the other MIMO layers. The stopping condition may be related to the accuracy which a user desires to obtain for the set of final estimates. If the stopping condition is met for one of the layer-associated blocks of the ML model, that layer-associated block may stop the iterative processing and output the processing result obtained at the last iteration as the set of final estimates. It should be also noted that, if required, each of the layer-associated blocks of the ML model may use a different set of intermediate weights at each iteration, i.e., the weights of different iterations may be not tied with each other (hereinafter referred to as the unrolled case). The opposite case (hereafter referred to as the iterative case) is also possible - i.e., the weights of the previous iteration may be used in the next iteration. The choice between the iterative and unrolled cases may be made based on hardware and radio performance requirements applicable to the wireless communication network.

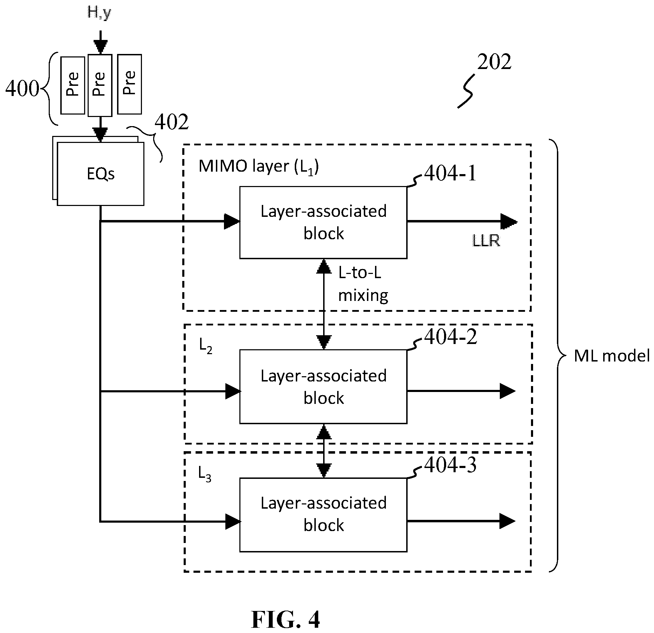

FIG. 4 shows a block diagram of the processor 202 included in the receiver 200 in accordance with a first example embodiment. In the first example embodiment, the processor 202 comprises a set 400 of pre-processing blocks, a set 402 of equalization blocks, and a set of layer-associated blocks 404-1, 404-2 and 404-3 of the ML model. Each pre-processing block of the set 400 of pre-processing blocks may be configured as the pre-processing block 102 of the ML-based receiver 100. In other words, each pre-processing block of the set 400 of pre-processing blocks may receive the array of symbols (in a frequency domain) and the set of reference signals over a certain MIMO layer and use them to obtain the channel information (e.g., the CSI matrix). The set 402 of equalization blocks may be configured as the set 104 of equalization blocks, i.e., each equalization block of the set 402 of equalization blocks may perform the equalization operation for one of the MIMO layers. The equalization operation may be represented by the LMMSE which can be written as

$$\hat{\mathbf{x}}_0 = (\mathbf{H}^{\mathrm{H}}\mathbf{H} + \sigma_{\mathrm{w}}^2 \mathbf{I})^{-1}\mathbf{H}^{\mathrm{H}}\mathbf{y},$$

where $\hat{\mathbf{x}}_0$ is the set of intermediate estimates for the array of symbols to be restored in the ML receiver 200, $\sigma_{\mathrm{w}}^2$ is the noise variance, and $\mathbf{I}$ is the identity matrix. Note that the inversion here uses information from all MIMO layers for all its outputs. It is also possible to use approximations of the LMMSE (e.g., with an approximated matrix inversion), which however sacrifices accuracy for lower computational cost.

The equalization operation may be also represented by the MRC which involves processing each MIMO layer independently from each other and may be written as

$$\hat{\mathbf{x}}_{0} = \mathrm{diag}(\|h_1\|^{-2}, \dots, \|\mathrm{h_T}\|^{-2})\mathbf{H}^{\mathrm{H}}\mathbf{y}.$$

where $h_i$ denotes i-th column of **H**.

The layer-associated block 406-1 of the ML model is configured to refine the set of intermediate estimates (i.e., $\hat{\mathbf{x}}_0$) obtained for the first MIMO layer ($L_1$), the layer-associated block 406-2 of the ML model is configured to refine the set of intermediate estimates obtained for the second MIMO layer ($L_2$), and the layer-associated block 406-3 of the ML model is configured to refine the set of intermediate estimates obtained for the third MIMO layer ($L_3$). Each of the layer-associated blocks 406-1, 406-2 and 406-3 of the ML model may output the set of final estimates as a set of LLRs. As also shown in FIG. 4, the layer-associated blocks 406-1, 406-2 and 406-3 of the ML model are interrelated in the sense that they exchange their weights between each other during the training phase of the ML model. Those skilled in the art would recognize that the number and arrangement of the constructive elements or blocks of the processor 202 are shown in FIG. 4 for illustrative purposes only and should not be considered as any limitation of the present disclosure - in other embodiments, the processor 202 may comprise more than three layer-associated blocks of the ML model, with each of them being related to one of the MIMO layers to be processed.

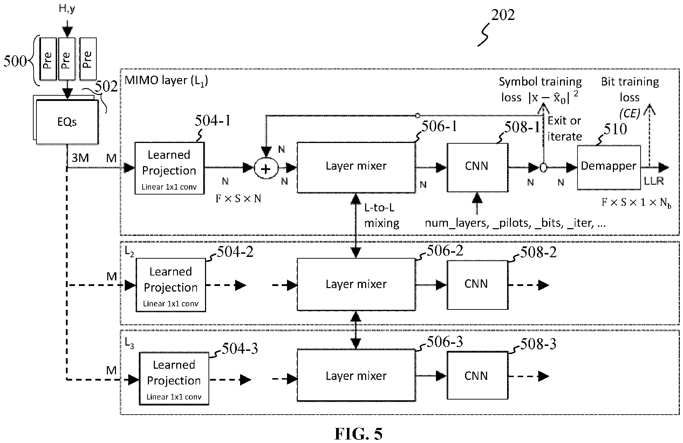

FIG. 5 shows a block diagram of the processor 202 included in the receiver 200 in accordance with a second example embodiment. In the second example embodiment, the processor 202 comprises a set 500 of pre-processing blocks and a set 502 of equalization blocks which may be implemented in the same or similar manner as the set 400 of pre-processing blocks and the set 402 of equalization blocks, respectively. As shown in FIG. 5, the processor 202 further comprises learned projection blocks 504-1, 504-2 and 504-3, each of which may be configured as the block 106 of the ML-based receiver 100. In other words, each of the learned projection blocks 504-1, 504-2 and 504-3 may subject the set of intermediate estimates for one of 3 MIMO layers to scaling such that it has a proper (for further processing) size (i.e., $F \times S \times N$). For example, this can be done by using a linear 1x1 convolution. After that, the learned projections (i.e., properly sized sets of intermediate estimates) obtained by the blocks 504-1, 504-2 and 504-3 are fed to layer mixers 506-1, 506-2 and 506-3, respectively. The layer mixer 506-1 is configured to mix the learned projection obtained for the first MIMO layer $L_1$ with the learned projections obtained for the rest (two) MIMO layers $L_2$ and $L_3$ such that the resulting learned projection is independent of the number of the MIMO layers. Each of the layer mixers 506-2 and 506-3 is configured to perform a similar mixing operation but for the second and third MIMO layers, respectively.

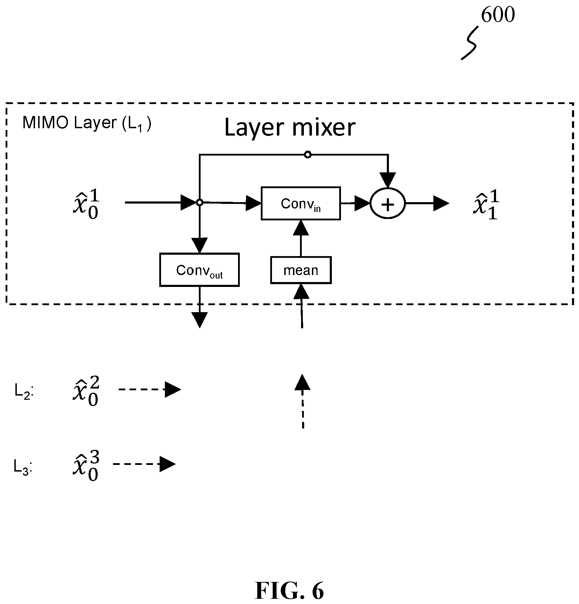

FIG. 6 shows a block diagram of a layer mixer 600 that may be used in the processor 202 in accordance with one example embodiment. In other words, the layer mixer 600 may be used as any of the layer mixers 506-1, 506-2 and 506-3 in the architecture of the processor 202 according to the second example embodiment, which is shown in FIG. 5. The layer mixer 600 uses linear pointwise convolutions for the first MIMO layer $L_1$ to select which information is to be sent to the other MIMO layers $L_2$ and $L_3$ and which information is, on the other hand, to be received from the other MIMO layers $L_2$ and $L_3$. It should be noted that this implementation is independent of the number of the MIMO layers because of the use of the mean function for the incoming information (i.e., the incoming learned projections) from the other MIMO layers $L_2$ and $L_3$. Similar operations may be performed for each of the MIMO layers $L_2$ and $L_3$.

Turning back to FIG. 5, the processor 202 according to the second example embodiment further comprises CNNs 508-1, 508-2 and 508-3 which are configured to refine the output data of the layer mixers 506-1, 506-2 and 506-3, respectively. More specifically, each of the CNNs 508-1, 508-2 and 508-3 may iteratively refine the corresponding input data until a certain user-defined stopping condition is met. If it is met, then the individual MIMO layer processing may be stopped; otherwise, the next iteration may be initiated. At the end of each individual MIMO layer processing, each of the CNNs 508-1, 508-2 and 508-3 outputs the set of final estimates for one of the MIMO layers. The set of final estimates for the first MIMO layer $L_1$ may be then fed to a demapper 510 to be converted to a set of bit LLRs; the same may be done in respect of the sets of final estimates for the second and third MIMO layers $L_2$ and $L_3$ (in order not to overload FIG. 5, no demapper is shown for each of the second and third MIMO layers $L_2$ and $L_3$, but such demappers are intended to be included in the processor 202 according to the second example embodiment).

It should be noted that the combination of the learned projection block 504-1, the layer mixer 506-1, the CNN 508-1 and the demapper 510 forms a layer-associated block for the first MIMO layer $L_1$. Layer-associated blocks for the second and third MIMO layers $L_2$ and $L_3$ are formed by similar combinations of the blocks.

Furthermore, the pre-processing blocks, the equalization blocks, the layer mixers, the CNNs, and the demappers are all trained blocks which are run separately for each MIMO layer, while sharing their trained weights across the MIMO layers.

As noted above, the MIMO layers are processed separately, independently of their total number. Given this, one may implement the above-mentioned early exit by altering the number of iterations per MIMO layer depending on the stopping condition.

Let us now consider one non-restrictive approach to implementing the early exit model. The CE loss function for training the ML-based receiver 200 may be written as follows:

$$CE_{iter} = CE\left(b, \hat{b}^{(1)}\right) + \cdots + CE\left(b, \hat{b}^{(N)}\right),$$

where $\hat{b}^{(k)}$ is the predicted bit probabilities after k-th iteration, and b is the ground truth (transmitted) bits. For a remainder, the CE loss function may be written as

$$CE\left(b, \hat{b}\right) = -\frac{1}{\#DB} \sum_{(i,j) \in D} \sum_{l=0}^{B-1} \left(b_{ijl} \log \hat{b}_{ijl} + \left(1 - b_{ijl}\right) \log\left(1 - \hat{b}_{ijl}\right)\right)$$

where $D$ is the set of indices corresponding to resource elements carrying data, $\#D$ is the number of such indices, and B is the number of samples in a sample batch. The predicted bit probabilities $\hat{b}_{ijl}$ are $\hat{b}_{ijl}$ = sigmoid ($L_{ijl}$), where $L_{ijl}$ is the LLRs (the output of each layer-wise block). The training is done for the maximum number of iterations N such that this number of iterations is always executed during training.

As previously mentioned, the iterative processing of each MIMO layer may be stopped separately when the stopping condition is met. For a multiuser MIMO scenario, the ideal stopping condition for a certain MIMO layer may be given by a Low-Density Parity Check (LDPC) decoder: LDPC may be performed after each iteration and the iteration for the MIMO layer may be stopped after first successful decoding. However, this approach is not possible in practice as the LDPC is too expensive in terms of latency. Therefore, the stopping condition is approximated using a surrogate model given by a NN which predicts remaining iterations needed. In this case, the NN is applied for each MIMO layer. For example, such a NN may be as follows:

Given:
P is the probability of LDPC success that is required from the system (e.g., 0.95).
Input:
$X_{stop}$ is the concatenation of the output of the layer-associated block of the ML model (LLR estimates) for the MIMO layer, after the last iteration.
Output:
$i^\wedge$ is the estimated number of iterations needed until $P$ success rate of LDPC encoding for the current MIMO layer.
Architecture:
$k$ is the number of ResNet CNN layers, followed by $t$ fully connected layers.

Training data may be generated by simulating data. Ground truths/labels for each sample may be obtained by running the ML-based receiver 200 for a full number of iterations and executing the LDPC after each iteration. The label is the first iteration index in which the LDPC succeeds.

Notice that for a single-user MIMO scenario, the LDPC needs to succeed jointly for all of the MIMO layers, but it may still be possible to stop processing some of the MIMO layers earlier and only at the decoding phase utilize the LLRs from all MIMO layers.

The stopping condition may also be applied during the inference phase. In this case, the above-proposed NN evaluates the stopping condition for each MIMO layer after each iteration and outputs the estimated remaining iterations before decoding is successful. A trained variable depth model is used as follows:

Given:

P is the threshold probability (e.g., 95%), indicating how big percentage of success is desired;

n is the maximum number of iterations;

ML model: Trained NN comprising layer-associated blocks;

$NN_{stop}$ is the trained stop NN that outputs remaining iterations;

Do:

1. Run the trained NN;

2. For each MIMO layer at each iteration k in range(n):

a. Run the layer-associated block with the demapper once, outputting LLR estimates;

b. Set M=M+1;

c. If M>N, stop an iteration process;

d. Else, concatenate the output of the layer-associated block with the LLR estimates into $X_{stop}$ and feed those through $NN_{stop}$ which outputs a prediction of remaining iterations i^;

e. If i^==0, stop the iteration process;

f. If (k+i^)>n, stop the iteration process *because there is no hope.*

Once the iteration process is stopped, the estimated LLRs are fed to the LDPC decoder to find the final result.

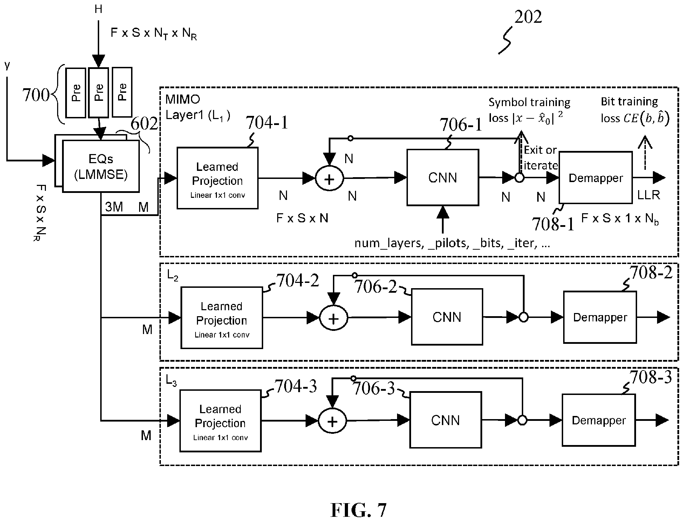

FIG. 7 shows a block diagram of the processor 202 included in the receiver 200 in accordance with a third example embodiment. In the third example embodiment, the processor 202 comprises a set 700 of pre-processing blocks and a set 702 of equalization blocks which may again be implemented in the same or similar manner as the set 400 of pre-processing blocks and the set 402 of equalization blocks, respectively. As shown in FIG. 7, the processor 202 further comprises learned projection blocks 704-1, 704-2 and 704-3, each of which may again be configured as the block 106 of the ML-based receiver 100. Unlike the second example embodiment, in the third example embodiment the processor 202 does not comprise any layer mixers. This is because the set 702 of equalization blocks comprises LMMSE-based equalization blocks, the mixing operation of which is found to be enough to exclude any dependence on the number of MIMO layers from further MIMO layer processing. Therefore, the use of layer mixers does not necessarily bring benefits when using the LMMSE-based equalization blocks. The learned projections obtained by the blocks 704-1, 704-2 and 704-3 are directly fed to CNNs 706-1, 706-2 and 706-3, respectively. The CNNs 706-1, 706-2 and 706-3 may be implemented in the same or similar manner as the CNNs 508-1, 508-2 and 508-3, respectively. In other words, the CNNs 706-1, 706-2 and 706-3 are configured to receive the learned projections (i.e., the properly sized sets of intermediate estimates) and, in response, output the sets of final estimates for the MIMO layers $L_1$, $L_2$ and $L_3$. The set of final estimates outputted by the CNN 706-1 is converted to bit LLRs by a demapper 708-1, the set of final estimates outputted by the CNN 706-2 is converted to bit LLRs by a demapper 708-2, and the set of final estimates outputted by the CNN 706-3 is converted to bit LLRs by a demapper 708-3. Each of the demappers 708-1, 708-2 and 708-3 may be implemented in the same or similar manner as the demapper 510. In the third example embodiment, the layer-associated block for the first MIMO layer $L_1$ is formed by the combination of the learned projection block 704-1, the CNN 706-1 and the demapper 708-1, the layer-associated block for the second MIMO layer $L_2$ is formed by the combination of the learned projection block 704-2, the CNN 706-2 and the demapper 708-2, and the layer-associated block for the third MIMO layer $L_3$ is formed by the combination of the learned projection block 704-3, the CNN 706-3 and the demapper 708-3.

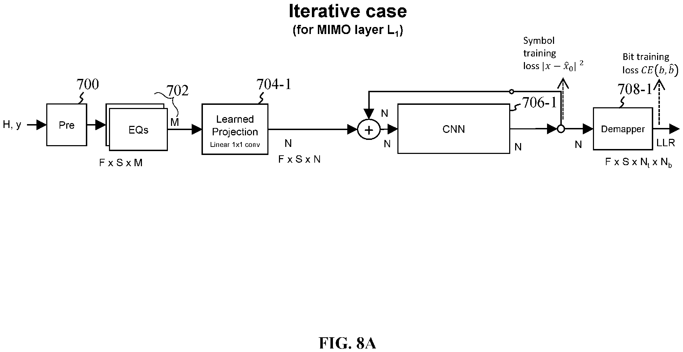

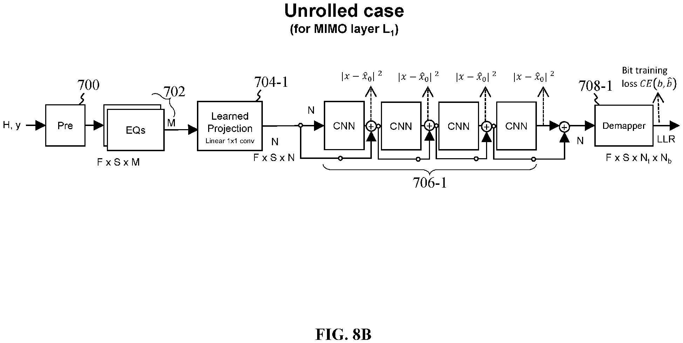

FIGs. 8A and 8B schematically show two different approaches for training each layer-associated block of the ML model in accordance with one example embodiment. More specifically, FIG. 8A illustrates the first (iterative) approach in which each next training iteration uses intermediate weights obtained on a previous training iteration, and FIG. 8B illustrates the second (unrolled) approach in which each training iteration uses a different set of intermediate weights. For simplicity, the iterative and unrolled cases are shown in FIGs. 8A and 8B with respect to the processing of the first MIMO layer $L_1$ by using the layer-associated block formed by the combination of the learned projection block 704-1, the CNN 706-1 and the demapper 708-1. The iterative and unrolled cases with respect to the processing of the rest (second and third) MIMO layers $L_2$ and $L_3$ may be implemented in the same manner but with the aid of the other layer-associated blocks (see FIG. 7).

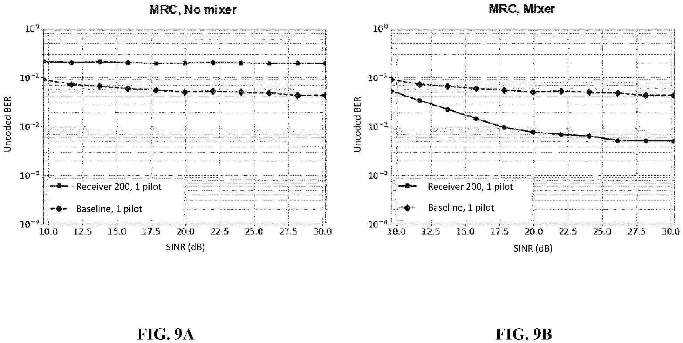

FIGs. 9A and 9B show an uncoded Bit-Error Rate (BER) versus a Signal to Interference and Noise Ratio (SINR) in dB, as obtained by using the MRC-based equalization in two cases: without layer mixers (FIG. 9A) and with layer mixers (FIG. 9B). The dashed curves with rhombic points correspond to a conventional non-ML-based receiver (hereinafter referred to as the baseline) and the solid curves with circular points correspond to the ML-based receiver 200 using the MRC-based equalization with and without the layer mixers (like the layer mixer 600). All the curves have been obtained by using a single pilot signal. It should be noted that these and other (discussed below) curves have been obtained by using either 5GMax or Sionna generated data using time-domain channel models. If not otherwise stated, the MIMO setup is 16x4 and the used modulation scheme is 256QAM. Since the MRC-based equalization utilizes only information from the current MIMO layer (i.e., no mixing operation is provided by using the MRC-based equalization), the layer mixers are needed to improve the BER.

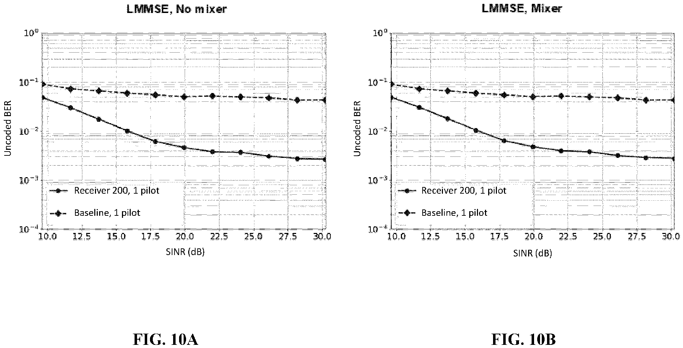

FIGs. 10A and 10B show the uncoded BER versus the SINR in dB, as obtained by using the LMMSE-based equalization in two cases: without layer mixers (FIG. 10A) and with layer mixers (FIG. 10B). Again, the dashed curves with rhombic points correspond to the baseline, and the solid curves with circular points correspond to the ML-based receiver 200 using the LMMSE-based equalization with and without the layer mixers (like the layer mixer 600). As noted earlier, the LMMSE-based equalization already involves some mixing of all MIMO layers when computing the inverse. Therefore, no layer mixers can be used in this case. This is demonstrated by the curves in FIGs. 10A and 10B, where the layer mixers do not bring additional performance as they do in the MRC-based equalization cases shown in FIGs. 9A and 9B. It should be noted that this result may be different for, e.g., different interference configurations, where the layer mixers may provide further gains.

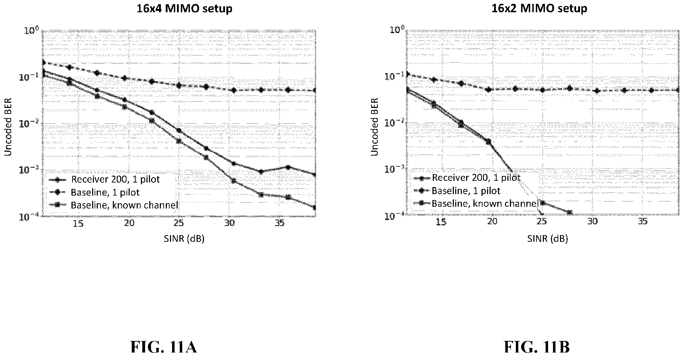

FIGs. 11A and 11B show the uncoded BER versus the SINR in dB for two different MIMO setups, namely: 16x4 MIMO setup (FIG. 11A) and 16x2 MIMO setup (FIG. 11B). In both MIMO setups, 5GMax generated data and 256QAM have been used. The dashed curves with rhombic points correspond to the baseline using a single pilot signal, the solid curves with square points correspond to the baseline using a known MIMO channel (i.e., known channel characteristics), and the solid curves with circular points correspond to the receiver 200 using a single pilot signal and the layer mixers (like the layer mixer 600). The ML-based receiver 200 (i.e., the ML model used therein) has initially been trained with respect to the 16x4 MIMO setup, and then it has been applied (without training) for the setup having lesser MIMO layers (i.e., the 16x2 MIMO setup). As can be seen, the ML-based receiver 200 works very well for both MIMO setups, thereby confirming its independence of the number of MIMO layers.

It should be noted that each step or operation of the method 300, or any combinations of the steps or operations, can be implemented by various means, such as hardware, firmware, and/or software. As an example, one or more of the steps or operations described above can be embodied by processor executable instructions, data structures, program modules, and other suitable data representations. Furthermore, the processor-executable instructions which embody the steps or operations described above can be stored on a corresponding data carrier and executed by the processor 202. This data carrier can be implemented as any computer-readable storage medium configured to be readable by said at least one processor to execute the processor executable instructions. Such computer-readable storage media can include both volatile and nonvolatile media, removable and non-removable media. By way of example, and not limitation, the computer-readable media comprise media implemented in any method or technology suitable for storing information. In more detail, the practical examples of the computer-readable media include, but are not limited to information-delivery media, RAM, ROM, EEPROM, flash memory or other memory technology, CD-ROM, digital versatile discs (DVD), holographic media or other optical disc storage, magnetic tape, magnetic cassettes, magnetic disk storage, and other magnetic storage devices.

Although the example embodiments of the present disclosure are described herein, it should be noted that any various changes and modifications could be made in the embodiments of the present disclosure, without departing from the scope of legal protection which is defined by the appended claims. In the appended claims, the word "comprising" does not exclude other elements or operations, and the indefinite article "a" or "an" does not exclude a plurality. The mere fact that certain measures are recited in mutually different dependent claims does not indicate that a combination of these measures cannot be used to advantage.

**Claims**

1.  A Machine Learning (ML)-based receiver in a wireless communication network, comprising:

    at least one processor; and
    at least one memory storing instructions that, when executed by the at least one processor, cause the ML-based receiver at least to:

    receive an array of symbols over a plurality of Multiple Input Multiple Output (MIMO) layers associated with a MIMO channel;
    receive a set of reference signals over the plurality of MIMO layers;
    based on the set of reference signals and the array of symbols, obtain channel information that is indicative of a state of the MIMO channel; and
    for each MIMO layer of the plurality of MIMO layers:

    obtain a set of intermediate estimates for the array of symbols by performing an equalization operation based on the channel information and the array of symbols; and
    obtain a set of final estimates for the array of symbols by using a layer-associated block of a ML model, the layer-associated block having a set of weights and configured to receive the set of intermediate estimates as input data and output the set of final estimates;

    wherein the layer-associated blocks of the ML model are further configured to operate in parallel and exchange the sets of weights between each other during a training phase of the ML model.

2. The ML-based receiver of claim 1, wherein each of the layer-associated blocks of the ML model is further configured to receive the input data from the other layer-associated blocks of the ML model as a combined value that is independent of a number of MIMO layers in the plurality of MIMO layers.

3. The ML-based receiver of claim 2, wherein the combined value comprises at least one of:

an arithmetic mean of the input data of the other layer-associated blocks of the ML model;
a sum of the input data of the other layer-associated blocks of the ML model;
a difference of the input data of the other layer-associated blocks of the ML model;
a product of the input data of the other layer-associated blocks of the ML model; and
a value obtained by concatenating the input data of the other layer-associated blocks of the ML model.

4. The ML-based receiver of anyone of claims 1 to 3, wherein each of the layer-associated blocks of the ML model is further configured to:

process the input data iteratively until a user-defined stopping condition is met; and
if the user-defined stopping condition is met, output a processing result obtained at a last iteration as the set of final estimates.

5. The ML-based receiver of claim 4, wherein each of the layer-associated blocks of the ML model is further configured to use a different set of intermediate weights at each iteration.

6. The ML-based receiver of anyone of claims 1 to 5, wherein each of the layer-associated blocks of the ML model comprises at least one of a Convolutional Neural Network (CNN), a Transformer NN (TNN) and a self-attention-based NN.

7. The ML-based receiver of any one of claims 1 to 6, wherein the equalization operation is a Linear Minimum Mean Square Error (LMMSE)-based equalization or a Maximum Ratio Combining (MRC)-based equalization.

8. A method for operating a Machine Learning (ML)-based receiver in a wireless communication network, comprising:

receiving an array of symbols over a plurality of Multiple Input Multiple Output (MIMO) layers associated with a MIMO channel;
receiving a set of reference signals over the plurality of MIMO layers;
based on the set of reference signals and the array of symbols, obtaining channel information that is indicative of a state of the MIMO channel; and
for each MIMO layer of the plurality of MIMO layers:

obtaining a set of intermediate estimates for the array of symbols by performing an equalization operation based on the channel information and the array of symbols; and
obtaining a set of final estimates for the array of symbols by using a layer-associated block of a ML model, the layer-associated block having a set of weights and configured to receive the set of intermediate estimates as input data and output the set of final estimates;

wherein the layer-associated blocks of the ML model are further configured to operate in parallel and exchange the sets of weights between each other during a training phase of the ML model.

9. The method of claim 8, wherein each of the layer-associated blocks of the ML model is further configured to receive the input data from the other layer-associated blocks of the ML model as a combined value that is independent of a number of MIMO layers in the plurality of MIMO layers.

10. The method of claim 9, wherein the combined value comprises at least one of:

an arithmetic mean of the input data of the other layer-associated blocks of the ML model;
a sum of the input data of the other layer-associated blocks of the ML model;
a difference of the input data of the other layer-associated blocks of the ML model;
a product of the input data of the other layer-associated blocks of the ML model; and
a value obtained by concatenating the input data of the other layer-associated blocks of the ML model.

11. The method of any one of claims 8 to 10, wherein each of the layer-associated blocks of the ML model is further configured to:

process the input data iteratively until a user-defined stopping condition is met; and
if the user-defined stopping condition is met, output a processing result obtained at a last iteration as the set of final estimates.

12. The method of claim 11, wherein each of the layer-associated blocks of the ML model is further configured to use a different set of intermediate weights at each iteration.

13. The method of any one of claims 8 to 12, wherein each of the layer-associated blocks of the ML model comprises at least one of a Convolutional Neural Network (CNN), a Transformer NN (TNN) and a self-attention-based NN.

14. The method of any one of claims 8 to 13, wherein the equalization operation is a Linear Minimum Mean Square Error (LMMSE)-based equalization or a Maximum Ratio Combining (MRC)-based equalization.

15. A computer program product comprising a computer-readable storage medium, wherein the computer-readable storage medium stores a computer code which, when executed by at least one processor, causes the at least one processor to perform the method according to any one of claims 8 to 14.

$100$

H, y → | Pre | → | EQs | → | Learned Projection Linear 1x1 conv | → (+) → | DeepRx Section | → ○ → | Demapper | → LLR

102 104 106 108 110

$F \times S \times 3M$ $F \times S \times 3N$ $F \times S \times N_t \times N_b$

Symbol training loss $|x - \hat{x}_0|^2$

Bit training loss $CE(b, \hat{b})$

**FIG. 1**

200

204

206

Instructions

Memory

202

Processor

ML-based receiver

**FIG. 2**

S302 — Receiving an array of symbols over a plurality of MIMO layers associated with a MIMO channel

300

S304 — Receiving a set of reference signals over the plurality of MIMO layers

S306 — Obtaining channel information based on the set of reference signals and the array of symbols

S308 — Obtaining a set of intermediate estimates for the array of symbols by performing an equalization operation based on the channel information and the array of symbols

S310 — Obtaining a set of final estimates for the array of symbols by using a layer-associated block of a ML model, wherein each layer-associated block is configured to receive the set of intermediate estimates as input data and output the set of final estimates, and the layer-associated blocks of the ML model are configured to exchange weights between each other during a training phase

For each MIMO layer in parallel

**FIG. 3**

**FIG. 4**

**FIG. 5**

$600$

FIG. 6

**FIG. 7**

**Iterative case**
(for MIMO layer $L_1$)

FIG. 8A

**Unrolled case**
(for MIMO layer $L_1$)

**FIG. 8B**

FIG. 9A                                    FIG. 9B

**FIG. 10A**

**FIG. 10B**

**16x4 MIMO setup**

**16x2 MIMO setup**

FIG. 11A                                   FIG. 11B

Europäisches
Patentamt

European
Patent Office

Office européen
des brevets

# EUROPEAN SEARCH REPORT

Application Number

EP 23 20 6715

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | KORPI DANI ET AL: "DeepRx MIMO: Convolutional MIMO Detection with Learned Multiplicative Transformations", ICC 2021 - IEEE INTERNATIONAL CONFERENCE ON COMMUNICATIONS, IEEE, 14 June 2021 (2021-06-14), pages 1-7, XP033953740, DOI: 10.1109/ICC42927.2021.9500518 [retrieved on 2021-07-28] * the whole document * | 1-15 | INV. H04L25/02 H04L25/03 H04L25/06 |
| A,D | HONKALA MIKKO ET AL: "DeepRx: Fully Convolutional Deep Learning Receiver", IEEE TRANSACTIONS ON WIRELESS COMMUNICATIONS, IEEE SERVICE CENTER, PISCATAWAY, NJ, US, vol. 20, no. 6, 2 February 2021 (2021-02-02), pages 3925-3940, XP011859718, ISSN: 1536-1276, DOI: 10.1109/TWC.2021.3054520 [retrieved on 2021-06-09] * the whole document * | 1-15 | |
| A | WO 2023/274556 A1 (NOKIA SOLUTIONS & NETWORKS OY [FI]) 5 January 2023 (2023-01-05) * page 8, line 35 - page 10, line 30 * * page 13, line 29 - page 15, line 15 * * figures 1,3A,3B * | 1-15 | TECHNICAL FIELDS SEARCHED (IPC) H04L |

The present search report has been drawn up for all claims

| Place of search | Date of completion of the search | Examiner |
|---|---|---|
| Munich | 12 April 2024 | Schiffer, Andrea |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 6715

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2024

| Patent document cited in search report | Publication date | Patent family member(s) | Publication date |
|---|---|---|---|
| WO 2023274556 A1 | 05-01-2023 | CN 117581511 A | 20-02-2024 |
| | | EP 4364367 A1 | 08-05-2024 |
| | | WO 2023274556 A1 | 05-01-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MIKKO HONKALA et al.** DeepRx: Fully Convolutional Deep Learning Receiver,. *IEEE Transactions on Wireless Communications*, June 2021, vol. 20 (6), 3925-3940

- **D. KORPI et al.** DeepRx MIMO: Convolutional MIMO Detection with Learned Multiplicative Transformations. *IEEE International Conference on Communications (ICC)*, 14 June 2021